(19) Europäisches Patentamt / European Patent Office / Office européen des brevets

(11) **EP 3 314 888 B1**

(12) **FASCICULE DE BREVET EUROPEEN**

(45) Date de publication et mention de la délivrance du brevet:
**06.02.2019 Bulletin 2019/06**

(21) Numéro de dépôt: **16741067.9**

(22) Date de dépôt: **10.06.2016**

(51) Int Cl.:
*H04N 5/33* (2006.01)          *H04N 5/365* (2011.01)
*H04N 5/367* (2011.01)

(86) Numéro de dépôt international:
**PCT/FR2016/051393**

(87) Numéro de publication internationale:
**WO 2016/207506 (29.12.2016 Gazette 2016/52)**

(54) **CORRECTION DE PIXELS PARASITES DANS UN CAPTEUR D'IMAGE INFRAROUGE**

KORREKTUR VON SCHLECHTEN PIXELN BEI EINER INFRAROT-BILDERFASSUNGSVORRICHTUNG

CORRECTION OF BAD PIXELS IN AN INFRARED IMAGE-CAPTURING APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2015 FR 1555963**

(43) Date de publication de la demande:
**02.05.2018 Bulletin 2018/18**

(73) Titulaire: **ULIS**
**38113 Veurey Voroize (FR)**

(72) Inventeurs:
• **SARAGAGLIA, Amaury**
  **38210 Vouray (FR)**
• **DURAND, Alain**
  **38500 Voiron (FR)**

(74) Mandataire: **Cabinet Beaumont**
**4, Place Robert Schuman**
**B.P. 1529**
**38025 Grenoble Cedex 1 (FR)**

(56) Documents cités:
**EP-A1- 0 651 566          US-A1- 2004 239 782**
**US-A1- 2011 057 802          US-A1- 2014 016 005**

**Description**

Domaine

La présente description concerne le domaine des dispositifs de capture d'image en infrarouge, et en particulier un procédé et un dispositif pour corriger des pixels parasites dans une image capturée par un réseau de pixels sensible à la lumière infrarouge.

Exposé de l'art antérieur

Les dispositifs de capture d'image en infrarouge (IR), comme les micro-bolomètres ou les dispositifs de capture d'image IR refroidis, comprennent un réseau de détecteurs sensibles au rayonnement infrarouge formant un réseau de pixels. Pour corriger les non-uniformités spatiales entre les pixels d'un tel réseau de pixels, une correction de décalage et de gain est en général appliquée à chaque signal de pixel (ou "valeur de pixel") d'une image capturée avant qu'elle soit affichée. Les valeurs de décalage et de gain sont générées pendant une phase d'étalonnage préliminaire en usine du dispositif en utilisant des sources émettrices uniformes (corps noirs) à des températures contrôlées, et sont mémorisées par le dispositif de capture d'image. De telles non-uniformités spatiales varient non seulement dans le temps mais aussi en fonction de la température des composants optiques, mécaniques et électroniques du dispositif de capture d'image, et par conséquent un obturateur mécanique interne est souvent utilisé dans le dispositif de capture d'image pour faciliter la correction d'image. Cela implique de capturer périodiquement une image pendant que l'obturateur est fermé afin d'obtenir une image de référence d'une scène relativement uniforme qui peut ensuite être utilisée pour l'étalonnage.

Il est courant que, à la suite du processus de fabrication de tels dispositifs de capture d'image infrarouge, un ou plusieurs pixels du réseau de pixels soient déclarés non fonctionnels à la fin de la phase d'étalonnage initiale du fabricant. De tels pixels sont en général connus dans le domaine technique sous le nom de "mauvais pixels", et ils sont identifiés dans une carte d'opérabilité mémorisée par le dispositif de capture d'image. Les valeurs de pixels générées par les mauvais pixels ne peuvent pas habituellement être considérées comme fiables, et par conséquent leurs valeurs de pixels sont remplacées par une valeur générée sur la base de pixels voisins dans l'image.

En outre on a découvert que pendant la durée de vie de tels dispositifs de capture d'image, le comportement en signal d'un ou plusieurs pixels initialement fonctionnels ne pouvait plus être décrit de façon acceptable par leurs paramètres d'étalonnage initiaux. Cela peut provenir de diverses modifications physiques ou même de dommages mécaniques provoqués par de minuscules particules mobiles internes laissées ou libérées dans le boitier du capteur par exemple. Ces pixels seront appelés ici pixels parasites. De tels pixels ne sont pas listés dans la carte d'opérabilité initiale, et ils peuvent dégrader la qualité de l'image.

Dans le cas de dispositifs de capture d'image équipés d'un obturateur, la demande de brevet français publiée sous le numéro FR3009388 décrit un procédé d'identification de tels pixels parasites pendant une période de fermeture d'obturateur quelconque, donnant des moyens pour mettre à jour de façon récurrente la carte d'opérabilité.

Cependant, il y a plusieurs inconvénients dans l'utilisation d'un obturateur, comme le poids et le coût supplémentaires et la fragilité de ce composant. En outre, dans certaines applications, l'utilisation d'un obturateur est inacceptable en raison du temps perdu pendant que l'obturateur est fermé et que l'étalonnage a lieu. Pendant cette période d'étalonnage, aucune image de la scène ne peut être capturée.

Dans un dispositif de capture d'image sans obturateur, il y a une difficulté technique pour l'identification de tels pixels parasites dans la scène d'image, en particulier si les valeurs de pixels sont dans une zone texturée d'une image capturée.

En supposant que les pixels parasites puissent être identifiés, de tels pixels parasites pourraient simplement être ajoutés à la liste des mauvais pixels. Toutefois, si le dispositif de capture d'image reçoit par exemple de multiples chocs pendant sa durée de vie à un point tel que la densité de pixels parasites dans l'image ne peut plus rester négligeable, une dégradation d'image pourrait se produire.

Il existe donc un besoin dans la technique, en particulier pour la capture d'images en infrarouge sans obturateur, d'un dispositif et d'un procédé pour détecter des pixels parasites, au moins pour mettre à jour la carte d'opérabilité, mais aussi pour ré-étalonner les pixels parasites particuliers qui seraient devenus mal étalonnés.

Résumé

Un objet de modes de réalisation de la présente description est de résoudre au moins partiellement un ou plusieurs besoins de l'art intérieur.

Selon un aspect, on prévoit un procédé de correction de pixels parasites d'un réseau de pixels d'un dispositif de capture d'image sensible au rayonnement infrarouge, le procédé comprenant : recevoir, par un dispositif de traitement du dispositif de capture d'image, une première image d'entrée capturée par le réseau de pixels, et corriger la première image d'entrée en appliquant des valeurs de gain et de décalage à des valeurs de pixels dans la première image d'entrée ; détecter dans la première image d'entrée corrigée au moins un pixel parasite, et ajouter ledit au moins un pixel parasite à une liste de pixels parasites ; recevoir, par le dispositif de traitement, une deuxième image d'entrée capturée par le réseau de pixels et corriger la deuxième image d'entrée en appliquant les valeurs de gain et de décalage à des valeurs de pixels dans la deuxième image d'entrée ; et calculer des valeurs de correction de gain et de décalage pour ledit au moins un pixel parasite sur la base des première et deuxième images d'entrée corrigées. Par exemple le fait de corriger les première et deuxième images d'entrée comprend de corriger des valeurs de pixels pour des pixels aux mêmes emplacements dans les première et deuxième images d'entrée.

Selon un mode de réalisation, le procédé comprend en outre une validation des valeurs de correction de gain et de décalage en les appliquant pour corriger les valeurs dudit au moins un pixel parasite dans une troisième image capturée par le réseau de pixels et en détectant si ledit au moins un pixel parasite est encore détecté comme pixel parasite dans la troisième image.

Selon un mode de réalisation, la troisième image d'entrée est capturée à une température du réseau de pixels différente de celle de chacune des première et deuxième images d'entrée.

Selon un mode de réalisation, le procédé comprend en outre, avant le calcul des valeurs de correction de gain et de décalage, l'ajout dudit au moins un pixel parasite détecté à une liste de mauvais pixels, et le retrait dudit au moins un pixel parasite détecté de la liste de mauvais pixels si les valeurs de correction de gain et de décalage sont validées pendant l'étape de validation.

Selon un mode de réalisation, le réseau de pixels comprend des colonnes de pixels, chaque colonne étant associée à un pixel de référence correspondant, et la correction des première et deuxième images d'entrée comprend : déterminer, sur la base de l'image d'entrée et d'un vecteur de composante de colonne représentant un écart de colonne introduit par les pixels de référence du réseau de pixels, un premier facteur d'échelle en estimant un niveau de l'écart de colonne présent dans l'image d'entrée ; générer des valeurs de décalage de colonne sur la base du produit du premier facteur d'échelle par les valeurs du vecteur de composante de colonne ; déterminer, sur la base de l'image d'entrée et d'une matrice de dispersion 2D représentant la dispersion 2D introduite par le réseau de pixels, un deuxième facteur d'échelle en estimant un niveau de la dispersion 2D présente dans l'image d'entrée ; générer des valeurs de décalage de pixel sur la base du produit du deuxième facteur d'échelle par les valeurs de la matrice de dispersion 2D ; et générer l'image corrigée en appliquant les valeurs de décalage de colonne et de pixels.

Selon un mode de réalisation, l'image corrigée est générée sur la base de l'équation :

$$CORR(x, y) = GAIN(x, y) \times (RAW(x, y) - \alpha.OFF_{COL}(x, y) - \beta.OFF_{DISP}(x, y) - \gamma)$$

où RAW est l'image d'entrée, $\alpha$ et $\beta$ sont des facteurs d'échelle, y est une valeur de correction de gain, GAIN(x, y) est une valeur de gain, $OFF_{COL}(x,y)$ et $OFF_{DISP}(x,y)$ sont des valeurs de décalage, $OFF_{COL}$ étant une matrice comprenant, dans chacune de ses rangées, le vecteur de colonne $V_{COL}$, $OFF_{DISP}$ étant la matrice de dispersion de référence.

Selon un mode de réalisation, le calcul des valeurs de correction de gain et de décalage pour ledit au moins un pixel parasite sur la base des première et deuxième images d'entrée corrigées comprend : estimer, sur la base de pixels voisins dans la première image d'entrée, une première valeur de pixel attendue de chacun desdits au moins un pixel parasite ; estimer, sur la base de pixels voisins dans la deuxième image d'entrée, une deuxième valeur de pixel attendue de chacun desdits au moins un pixel parasite ; et calculer les valeurs de correction de gain et de décalage sur la base des première et deuxième valeurs de pixels attendues estimées.

Selon un mode de réalisation, la détection dudit au moins un pixel parasite comprend : calculer un score pour une pluralité de pixels cibles comprenant au moins certains des pixels de la première image d'entrée, le score pour chaque pixel cible étant généré sur la base de k pixels voisins connectés de l'image d'entrée dans une fenêtre de H par H pixels autour du pixel cible, H étant un entier impair égal ou supérieur à 3, et k étant un entier compris entre 2 et 5, dans lequel chacun des pixels voisins connectés partage une frontière ou un coin avec au moins un autre des pixels voisins connectés et/ou avec le pixel cible et dans lequel au moins l'un des pixels voisins connectés partage une frontière ou un coin avec le pixel cible ; et détecter qu'au moins l'un des pixels est un pixel parasite sur la base des scores calculés.

Selon un mode de réalisation, la détection dudit au moins un pixel parasite comprend la comparaison d'au moins certains des scores à une valeur de seuil.

Selon un mode de réalisation, la comparaison d'au moins certains des scores à une valeur de seuil implique la comparaison d'un sous-ensemble des scores à la valeur de seuil, le sous-ensemble comprenant plusieurs des scores les plus élevés, et la valeur de seuil est calculée sur la base de l'équation suivante :

$$thr_{SPUR} = Q3 + x_{EI} \times (Q3 - Q1)$$

où $X_{EI}$ est un paramètre égal à au moins 1, 0 et Q1 et Q3 sont les premier et troisième quartiles respectivement du sous-ensemble.

Selon un mode de réalisation, lesdits au moins certains scores sont sélectionnés en appliquant un autre seuil aux scores calculés.

Selon un mode de réalisation, l'autre seuil est calculé sur la base d'une supposition que les valeurs de pixels dans l'image ont une distribution de probabilités basée sur la distribution de Laplace.

Selon un mode de réalisation, l'autre seuil est calculé sur la base de l'équation suivante :

$$thr_{outlier} = \frac{\ln(4)}{\hat{\lambda}} + 1.5 \times \frac{\ln(3)}{\hat{\lambda}}$$

où $\hat{\lambda}$ est une estimation du paramètre de la distribution exponentielle $f(x) = \lambda e^{-\lambda x}$ correspondant à la valeur absolue des scores calculés.

Selon un autre aspect, on prévoit un support de stockage lisible par un ordinateur mémorisant des instructions pour mettre en oeuvre le procédé susmentionné lorsqu'elles sont exécutées par un dispositif de traitement.

Selon un autre aspect, on prévoit un dispositif de traitement d'image comprenant : une mémoire mémorisant des valeurs de décalage et de gain et une liste de pixels parasites ; un dispositif de traitement adapté à : recevoir une première image d'entrée capturée par un réseau de pixels d'un dispositif de capture d'image sensible au rayonnement infrarouge, et corriger la première d'image d'entrée en appliquant les valeurs de gain et de décalage à des valeurs de pixels dans la première image d'entrée ; détecter dans la première image d'entrée corrigée au moins un pixel parasite, et ajouter ledit au moins un pixel parasite à la liste de pixels parasites ; recevoir une deuxième image d'entrée capturée par le réseau de pixels et corriger la deuxième image d'entrée en appliquant les valeurs de gain et de décalage à des valeurs de pixels dans la deuxième image d'entrée ; et calculer des valeurs de correction de gain et de décalage pour ledit au moins un pixel parasite sur la base des première et deuxième images d'entrée corrigées.

Selon un mode de réalisation, le dispositif de traitement est en outre adapté à valider les valeurs de correction de gain et de décalage en les appliquant pour corriger les valeurs dudit au moins un pixel parasite dans une troisième image d'entrée capturée par le réseau de pixels et en détectant si ledit au moins un pixel parasite est encore détecté comme pixel parasite dans la troisième image.

Brève description des dessins

Les caractéristiques susmentionnées et d'autres et leurs avantages apparaitront clairement avec la description détaillées suivantes de modes de réalisation, donnés à titre d'illustration et non de limitation, en faisant référence aux dessins joints dans lesquels :

la figure 1 illustre schématiquement un dispositif de capture d'image selon un exemple de réalisation ;
la figure 2 illustre schématiquement un bloc de traitement d'image du dispositif de capture d'image de la figure 1 plus en détail selon un exemple de réalisation ;
la figure 3 est un organigramme représentant des opérations dans un procédé de détection et de correction de pixels parasites selon un exemple de réalisation de la présente description ;
la figure 4 est un organigramme illustrant des opérations dans un procédé de génération de valeurs de correction de décalage et de gain selon un exemple de réalisation de la présente description ;
la figure 5 est un organigramme illustrant des opérations dans un procédé de validation de valeurs de correction de décalage et de gain selon un exemple de réalisation ;
la figure 6 est un organigramme illustrant des opérations dans un procédé d'identification de pixels parasites selon un exemple de réalisation ;
la figure 7 est un organigramme illustrant des opérations dans un procédé de génération de scores de pixels selon un exemple de réalisation ;
la figure 8A illustre un exemple de sélection de pixels voisins connectés selon un exemple de réalisation de la présente description ;
la figure 8B illustre des exemples de pixels voisins connectés et non connectés selon un exemple de réalisation ; et
la figure 8C illustre un exemple d'un bord et d'un pixel parasite selon un exemple de réalisation.

Description détaillée

Bien que certains des modes de réalisation dans la description suivante soit décrits en relation avec un réseau de pixels du type micro-bolomètre, il sera clair pour l'homme de l'art que les procédés décrits ici pourraient également être appliqués à d'autres types de dispositifs de capture d'image IR, y compris des dispositifs refroidis. En outre, bien qu'on décrive ici des modes de réalisation en relation avec un dispositif de capture d'image IR sans obturateur, ces modes de réalisation pourraient également s'appliquer à un dispositif de capture d'image IR comprenant un obturateur mécanique et à des images capturées par un tel dispositif.

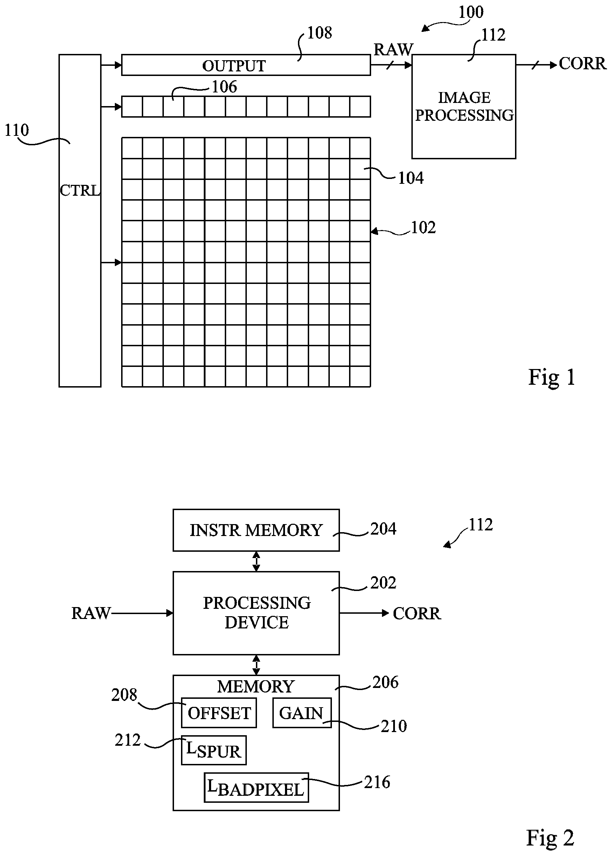

La figure 1 illustre un dispositif de capture d'image IR 100 comprenant un réseau de pixels 102 sensible à la lumière IR. Par exemple, dans certains modes de réalisation, le réseau de pixels est sensible à la lumière IR à ondes longues, comme la lumière ayant une longueur d'onde comprise entre 7 et 13 $\mu$m. Le dispositif 100 est par exemple capable de capturer des images seules et aussi des séquences d'images constituant de la vidéo. Le dispositif 100 est par exemple un dispositif sans obturateur.

Pour faciliter l'illustration, on a illustré en figure 1 un réseau de pixels 102 de seulement 144 pixels 104, agencés en 12 rangées et 12 colonnes. Dans des variantes de réalisation, le réseau de pixels 102 pourrait comprendre un nombre quelconque de rangées et de colonnes de pixels. Typiquement, le réseau comprend par exemple 640 par 480, ou 1024 par 768 pixels.

Chaque colonne de pixels du réseau 102 est associée à une structure de référence correspondante 106. Bien qu'elle ne soit pas fonctionnellement un élément d'image, cette structure va être appelée ici "pixel de référence" par analogie structurelle avec les pixels de formation d'image (ou actifs) 104. En outre, un bloc de sortie (OUTPUT) 108 est couplé à chaque colonne du réseau de pixels 102 et à chacun des pixels de référence 106, et fournit une image brute RAW.

Un circuit de commande (CTRL) 110 fournit par exemple des signaux de commande au réseau de pixels, aux pixels de référence 106 et au bloc de sortie 108. L'image brute RAW est par exemple fournie à un bloc de traitement d'image (IMAGE PROCESSING) 112, qui applique des décalages et des gains aux pixels de l'image pour produire une image corrigée CORR.

Chacun des pixels 104 comprend par exemple un bolomètre. Les bolomètres sont bien connus dans la technique, et comprennent par exemple une membrane suspendue au-dessus d'un substrat, comprenant une couche de matériau absorbant l'infrarouge et ayant la propriété que sa résistance est modifiée par l'élévation de température de la membrane associée à la présence de rayonnement IR.

Le pixel de référence 106 associé à chaque colonne comprend par exemple un bolomètre aveugle, qui a par exemple une structure similaire à celle des bolomètres actifs des pixels 104 du réseau, mais qui est rendu insensible au rayonnement provenant de la scène image, par exemple par un écran constitué d'une barrière réfléchissante et/ou par un dissipateur thermique obtenu par conception, par exemple en assurant une conductance thermique élevée vers le substrat, le bolomètre étant par exemple formé en contact direct avec le substrat.

Pendant une opération de lecture du réseau de pixels 102, les rangées de pixels sont par exemple lues une par une.

Un exemple de réseau de pixels du type bolomètre est par exemple décrit plus en détail dans le brevet des États-Unis d'Amérique US 7700919, cédé à la demanderesse, dont le contenu est inclus ici dans les limites autorisées par la loi.

La figure 2 illustre le bloc de traitement d'image 112 de la figure 1 plus en détails selon un exemple de réalisation.

Les fonctions du bloc de traitement d'image 112 sont par exemple mises en oeuvre par du logiciel et le bloc de traitement d'image 112 comprend un dispositif de traitement (PROCESSING DEVICE) 202 comportant un ou plusieurs processeurs sous le contrôle d'instructions mémorisées dans une mémoire d'instructions (INSTR MEMORY) 204. Dans des variantes de réalisation, les fonctions du bloc de traitement d'image 112 pourraient être mises en oeuvre partiellement par du matériel dédié. Dans un tel cas, le dispositif de traitement 202 comprend par exemple un ASIC (circuit intégré spécifique d'application) ou un FPGA (réseau de portes programmable sur site), et la mémoire d'instructions 204 peut être omise.

Le dispositif de traitement 202 reçoit l'image d'entrée brute RAW et génère l'image corrigée CORR, qui est par exemple fournie à un afficheur (non illustré) du dispositif de capture d'image. Le dispositif de traitement 202 est aussi couplé à une mémoire de données (MEMORY) 206 mémorisant des valeurs de décalage (OFFSET) 208, des valeurs de gain (GAIN) 210, une liste ($L_{SPUR}$) 212 de pixels parasites identifiés et une liste ($L_{BADPIXEL}$) de mauvais pixels.

Les valeurs de décalage sont par exemple représentées par un vecteur $V_{COL}$ représentant un écart de colonne structurel, et une matrice $OFF_{DISP}$ représentant une dispersion structurelle 2D non de colonne introduite par le réseau de pixels 102. L'écart de colonne résulte par exemple principalement de l'utilisation du pixel de référence 106 dans chaque colonne, alors que la rangée de pixels de référence de colonne n'est en général pas parfaitement uniforme. La dispersion 2D non de colonne résulte par exemple principalement de différences locales physiques et/ou structurelles entre les bolomètres actifs du réseau de pixels, résultant par exemple de dispersions technologiques dans le processus de fabrication.

La génération du vecteur $V_{COL}$ et de la matrice $OFF_{DISP}$, et la correction de valeurs de pixel sur la base de ce vecteur et de la matrice sont décrites plus en détail dans la demande de brevet US US14/695539, déposée le 24 avril 2015, cédée à la demanderesse, dont le contenu est inclus ici dans les limites autorisés par la loi, et dans la demande de brevet français FR14/53917 déposée le 30 avril 2014, et dans la demande de brevet japonais JP2015-093484, déposée le 30 avril 2015, aussi au nom de la demanderesse.

On va maintenant décrire un procédé tel que décrit dans ces demandes. On supposera que l'image brute RAW a été capturée par le réseau de pixels 102 de la figure 1, et que le réseau de pixels est du type où chaque colonne du réseau est associée à un pixel de référence 106 correspondant.

Une image corrigée CORR est par exemple générée sur la base de l'image brute RAW en appliquant l'équation suivante :

$$CORR(x, y) = GAIN(x, y) \times (RAW(x, y) - \alpha OFF_{COL}(x, y) - \beta OFF_{DISP}(x, y) - \gamma) - res \qquad \sim 1$$

où x, y sont les coordonnées de pixel 104, $\alpha$ et $\beta$ sont des facteurs d'échelle, $\gamma$ est une valeur de correction de gain, GAIN(x,y) est une valeur de gain, $OFF_{COL}(x,y)$ et $OFF_{DISP}(x,y)$ sont des valeurs de décalage, $OFF_{COL}$ étant une matrice comprenant, dans chacune de ses rangées, le vecteur de colonne $V_{COL}$, $OFF_{DISP}$ étant la matrice de dispersion de référence, et res est une correction résiduelle, qui par exemple est utilisée dans certains modes de réalisation pour corriger les résidus de colonne et/ou les résidus de dispersion restants dans l'image.

Le facteur d'échelle $\alpha$ est par exemple déterminé sur la base de l'équation suivant :

$$\alpha = \frac{\sum_x \left( \frac{1}{m} \sum_y T(RAW(x,y)) \times T(V_{COL}(x)) \right)}{\sum_x T(V_{COL}(x)) \times T(V_{COL}(x))} \qquad \sim 2$$

où T() représente un filtre passe-haut appliqué au vecteur de colonne $V_{COL}$ et à l'image d'entrée RAW, et m est le nombre de rangées dans l'image. En d'autres termes, la détermination du facteur échelle $\alpha$ implique par exemple l'application du filtre passe-haut à l'image brute suivant ses rangées et aussi au vecteur de colonne de référence, la détermination de moyennes de colonnes de l'image filtrée, donnant un vecteur de la même taille que le vecteur de colonne de référence, puis la détermination du facteur d'échelle en tant que minimisation des différences entre les deux vecteurs, c'est à dire entre les moyennes de colonne de l'image filtrée et le vecteur de colonne filtré.

Le facteur d'échelle $\beta$ est par exemple déterminé sur la base de l'équation suivante :

$$\beta = \frac{\sum(\nabla_x RAW \cdot \nabla_x OFF_{DISP} + \nabla_y RAW \cdot \nabla_y OFF_{DISP})}{\sum((\nabla_x OFF_{DISP})^2 + (\nabla_y OFF_{DISP})^2)} \qquad \sim 3$$

où $\nabla_x$ est la valeur de gradient de pixel entre des pixels adjacents dans la direction horizontale de l'image, en d'autres termes suivant chaque rangée, et $\nabla_y$ est la valeur de gradient de pixel entre des pixels adjacents dans la direction verticale de l'image, en d'autres termes suivant chaque colonne.

Bien que dans la suite la correction de gain et de décalage soit décrite comme étant basée sur les équations 1 et 3 susmentionnés, dans des variantes de réalisation on pourrait utiliser d'autres procédés de correction.

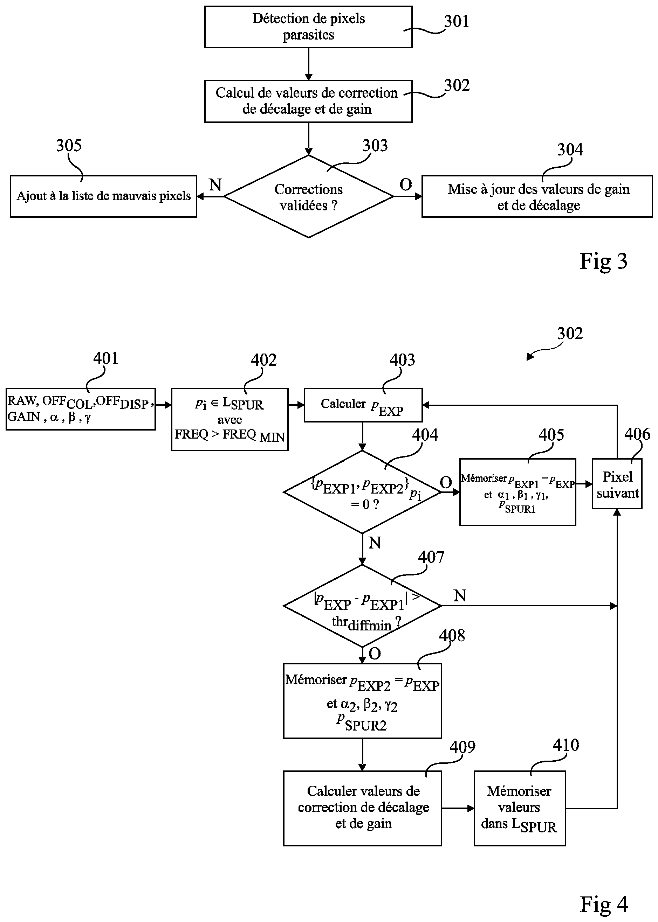

La figure 3 est un organigramme représentant des opérations dans un procédé de détection et de correction de pixels parasites selon un exemple de réalisation. Ce procédé est par exemple mis en oeuvre par le circuit 112 de la figure 2 à chaque fois qu'une nouvelle image est capturée.

Des pixels parasites sont des pixels pour lesquels le décalage et le gain se sont écartés de leurs valeurs étalonnées d'origine, par exemple en conséquence d'un choc mécanique ou de dommages dus à de minuscules particules internes mobiles. Un pixel parasite peut correspondre à un "mauvais pixel" supplémentaire, qui a par exemple été détruit et qui est par conséquent incapable de donner un signal utilisable en relation avec la scène. Cependant, les présents inventeurs ont trouvé que souvent un pixel parasite peut encore être capable de donner un signal utilisable en relation avec la scène, mais que sa valeur est devenue décalée en permanence, de façon stable, en termes de décalage et de gain par rapport à la valeur étalonnée d'origine.

Dans une opération 301, des pixels parasites sont détectés dans une image CORR, qui correspond à une image brute RAW corrigée sur la base des valeurs de gain et de décalage. Les pixels parasites détectés forment la liste $L_{SPUR}$. Comme on va le décrire plus en détail ci-après, dans un mode de réalisation les pixels parasites sont détectés sur la base d'un calcul de la distance (en terme de valeurs de pixels) par rapport à des voisins connectés de chaque pixel dans l'image. Cependant, dans des variantes de réalisation, on pourrait appliquer d'autres techniques afin d'identifier les pixels parasites. Par exemple, un ou plusieurs pixels parasites pourraient être identifiés manuellement par un utilisateur. En outre, dans certains modes de réalisation, l'image CORR pourrait être une scène uniforme, par exemple si elle est capturée avec un obturateur fermé d'un dispositif de capture d'image, facilitant par cela l'identification de pixels parasites.

Dans une opération suivante 302, des valeurs de correction de décalage et de gain sont calculées pour chaque pixel parasite identifié. En d'autres termes, pour chaque pixel parasite identifié, des valeurs de correction sont calculées pour corriger les valeurs de décalage et de gain courantes mémorisées. Ce calcul est par exemple basé sur au moins deux images capturées.

Dans une opération suivante 303, une validation de ces valeurs de correction de décalage et de gain est par exemple réalisée pour chaque pixel parasite. La validation est par exemple réalisée à une température du plan focal différente de la température au moment où les valeurs de correction de décalage et de gain ont été calculées, afin de vérifier que les corrections calculées assurent une correction appropriée pour ces pixels lorsque la température du plan focal change. La température du plan focal correspond à la température du réseau de pixels. En d'autres termes, les inventeurs ont remarqué qu'au moins une partie des pixels parasites détectés peuvent encore être corrigés de façon permanente, même si leurs décalages et leurs gains se sont décalés, et que la qualité des valeurs de correction de décalage et de gain calculées obtenues pour ces pixels parasites est par exemple vérifiée par leur stabilité alors que la température du plan focal a changé.

Si dans l'opération 303, les valeurs de correction de gain et de décalage sont validées, les valeurs de gain et de décalage 208, 210 pour les pixels parasites sont par exemple mises à jour, dans une opération 304, par les valeurs de correction calculées dans l'opération 302.

Dans l'autre cas, si dans l'opération 303 les valeurs de correction de gain et de décalage ne sont pas validées, dans une opération 305 les pixels parasites sont ajoutés à une liste de mauvais pixels. En d'autres termes, les pixels parasites pour lesquels les corrections sont instables avec les changements de température du plan focal sont classés comme mauvais pixels supplémentaires. Les pixels se trouvant sur la liste de mauvais pixels ont par exemple leur valeur de pixel remplacée par une estimation de pixel basée sur un ou plusieurs de leurs pixels voisins.

Dans une variante de réalisation, tous les pixels parasites identifiés dans l'opération 301 sont systématiquement ajoutés à la liste de mauvais pixels, et ne sont ensuite retirés de cette liste que si la correction est validée dans l'opération 303.

Dans certains modes de réalisation, plutôt que d'essayer de corriger les pixels identifiés comme étant parasites, les opérations 302, 303 et 304 pourraient être omises, et le procédé pourrait impliquer systématiquement l'ajout de tous les pixels parasites détectés à la liste de mauvais pixels dans l'opération 305. Une telle approche économiserait le coût du traitement associé aux opérations 302 et 303. Dans encore une autre variante, certains pixels pourraient être initialement ajoutés à la liste des mauvais pixels, et si le nombre de mauvais pixels dépasse un niveau de seuil, un ou plusieurs pixels parasites précédemment identifiés, ou un ou plusieurs pixels parasites nouvellement identifiés, pourraient être corrigés en utilisant les opérations 302 et 303.

La figure 4 est un organigramme illustrant un exemple d'opérations pour calculer des valeurs de correction de décalage et de gain dans l'opération 302 de la figure 3.

Dans une opération 401, une image est par exemple capturée et les valeurs de pixel d'au moins certains des pixels sont corrigées en utilisant les valeurs de décalage et de gain 208, 210, par exemple sur la base de l'équation 1 susmentionnée. Les entrées du procédé sont par exemple l'image capturée brute RAW, les valeurs de décalage $OFF_{COL}$ et $OFF_{DISP}$, les valeurs de gain GAIN et les termes $\alpha$, $\beta$ et $\gamma$ utilisés pour corriger l'image selon l'équation 1 susmentionnée. On supposera aussi que la liste $L_{SPUR}$ de pixels parasites a été générée dans l'opération 301 de la figure 3.

Dans une opération 402, les pixels $p_i$ de la liste $L_{SPUR}$ pour lesquels la fréquence de détection FREQ dépasse un niveau de seuil $FREQ_{MIN}$ sont sélectionnés, et les opérations suivantes du procédé sont réalisées seulement sur ces pixels. Cette opération signifie par exemple que l'algorithme de correction est appliqué seulement aux pixels qui sont détectés de façon répétée comme pixels parasites. Par exemple, à chaque fois qu'un pixel $p_i$ est détecté comme pixel parasite, la fréquence de détection FREQ est calculée comme étant égale au nombre de fois que le pixel a été détecté comme parasite dans les N images précédentes, où N est par exemple compris entre 2 et 20. Si cette fréquence est supérieure à $FREQ_{MIN}$, égale par exemple à N/2, le pixel est sélectionné. Dans certains modes de réalisation, cette opération est omise, et les opérations suivantes du procédé sont appliquées à tous les pixels se trouvant sur la liste $L_{SPUR}$.

Dans une opération 403, une valeur attendue $p_{EXP}$ du pixel est calculée. Par exemple, lorsqu'un pixel est devenu parasite, sa valeur $p_{CORR}$, après la correction de gain et de décalage, mais qui a été identifiée comme aberrante, peut être exprimée par :

$$p_{CORR} = g \times (p_{SPUR} - \alpha \times o_{COL} - \beta \times o_{DISP} - \gamma) - res \qquad \sim 4$$

où $p_{SPUR}$ est la valeur de pixel du pixel parasite de la matrice RAW, $o_{COL}$ et $o_{DISP}$ sont les valeurs de la matrice $OFF_{COL}$ et $OFF_{DISP}$ appliquée au pixel, g est la valeur de la matrice GAIN appliquée au pixel, et $\alpha$, $\beta$, $\gamma$ et res sont les mêmes que dans l'équation 1 susmentionnée. En supposant que ce pixel peut être corrigé de façon appropriée, il existe des valeurs de correction de gain et de décalage $s_{Gain}$ et $s_{Off}$ telles que :

$$p_{EXP} = (g - s_{Gain}) \times (p_{SPUR} - \alpha \times o_{COL} - \beta \times (o_{DISP} - s_{Off}) - \gamma) - res \qquad \sim 5$$

où $p_{EXP}$ est la valeur de pixel attendue, et est par exemple égale à ou proche de la valeur qui pourrait avoir été obtenue si les valeurs de gain et de décalage avaient été recalculées sur la base d'une ou plusieurs nouvelles images de référence. Étant donné qu'il y a deux inconnues, pour déterminer les valeurs de $s_{Gain}$ et de $s_{Off}$, deux valeurs attendues sont par exemple calculées comme on va le décrire maintenant.

La valeur attendue de $p_{EXP}$ est par exemple calculée sur la base de ses pixels voisins. Par exemple, un algorithme couramment utilisé pour corriger des mauvais pixels est appliqué, comme une interpolation de données de pixels, une extrapolation et/ou une technique connue dans la technique sous le nom de "Inpainting".

Dans une opération 404, on vérifie si, en plus de la nouvelle valeur $p_{EXP}$, une valeur précédente $p_{EXP1}$ ou $p_{EXP2}$ est aussi disponible pour le pixel $p_{SPUR}$, en d'autres termes si l'ensemble $\{p_{EXP1}, p_{EXP2}\}_{pi}$ est vide ou pas. Si une valeur précédente $p_{EXP1}$ existe, cela implique qu'elle a été déterminée pour une image précédente dans laquelle les valeurs de pixel d'au moins certains des pixels ont été corrigées en utilisant les mêmes valeurs de décalage et de gain 208, 210 que celles appliquées à l'image courante. En d'autres termes, les emplacements des pixels corrigés dans les images courante et précédente sont par exemple les mêmes. Si l'ensemble $\{p_{EXP1}, p_{EXP2}\}_{pi}$ est vide et qu'il n'y a pas de valeurs précédentes, dans une opération 405 la valeur de $p_{EXP}$ est mémorisée comme $p_{EXP1}$, et les facteurs d'échelle $\alpha$ et $\beta$ et la valeur de correction de gain $\gamma$ appliqués au pixel sont mémorisés comme valeurs $\alpha_1$, $\beta_1$, $\gamma_1$, et la valeur de pixel $p_{SPUR}$ est aussi mémorisée comme valeur $p_{SPUR1}$. Dans une opération 406, le pixel suivant de la liste $L_{SPUR}$ pour lequel la fréquence de détection FREQ est supérieure à $FREQ_{MIN}$ est par exemple sélectionné, et le procédé revient à l'opération 403.

Si, lorsque l'opération 404 est réalisée, il y a déjà une valeur de $p_{EXP1}$ pour le pixel, dans une opération suivante 407, on détermine par exemple si la différence absolue entre la valeur nouvelle $p_{EXP}$ et la valeur précédente $p_{EXP1}$ est supérieure à une valeur de seuil $thr_{diffmin}$. Dans la négative, le procédé revient à l'opération 406. Autrement si les valeurs de pixel sont suffisamment espacées, l'opération suivante est l'opération 408.

Dans l'opération 408, la nouvelle valeur $p_{EXP}$ est mémorisée comme $p_{EXP2}$ et les facteurs d'échelle $\alpha$ et $\beta$ et la valeur de correction de gain $\gamma$ appliqués au pixel sont mémorisés comme valeurs $\alpha_2$, $\beta_2$, $\gamma_2$, et la valeur de pixel $p_{SPUR}$ est aussi mémorisée comme valeur $p_{SPUR2}$.

Dans une opération 409, des valeurs de correction de décalage et de gain $S_{Gain}$ et $S_{Off}$ sont par exemple calculées sur la base des estimations $p_{EXP1}$ et $p_{EXP2}$. Par exemple, la valeur de $s_{Off}$ est calculée sur la base de l'équation suivante :

$$s_{Off} = \frac{p_{EXP2} \times (p_{SPUR1} - \acute{o}_1) - p_{EXP1} \times (p_{SPUR2} - \acute{o}_2)}{\beta_2 \times p_{EXP1} - \beta_1 \times p_{EXP2}} \qquad \sim 7$$

où $\acute{o}_i = \alpha_i \times o_{COL} + \beta_i \times o_{DISP} + \gamma_i$.

La valeur de $S_{Gain}$ est par exemple calculée sur la base de l'équation suivante :

$$s_{Gain} = g - \frac{p_{EXP1}}{p_{SPUR1} - \acute{o}_1 + \beta_1 \times \lambda_{Offset}} \qquad \sim 8$$

Bien sûr, il serait possible de calculer d'abord une valeur de $S_{Gain}$ puis de substituer cette valeur afin de calculer la valeur $S_{Off}$.

Dans une opération suivante 410, les valeurs de correction de gain et de décalage $s_{GAIN}$ et $s_{OFF}$ sont par exemple mémorisées dans la liste $L_{SPUR}$ en association avec le pixel $p_{SPUR}$. Le procédé revient ensuite par exemple à l'opération 406 jusqu'à ce que tous les pixels de la liste $L_{SPUR}$ pour lesquels la fréquence de détection FREQ est supérieure à $FREQ_{MIN}$ aient été traités. Le procédé est ensuite par exemple répété lorsqu'une image suivante est capturée.

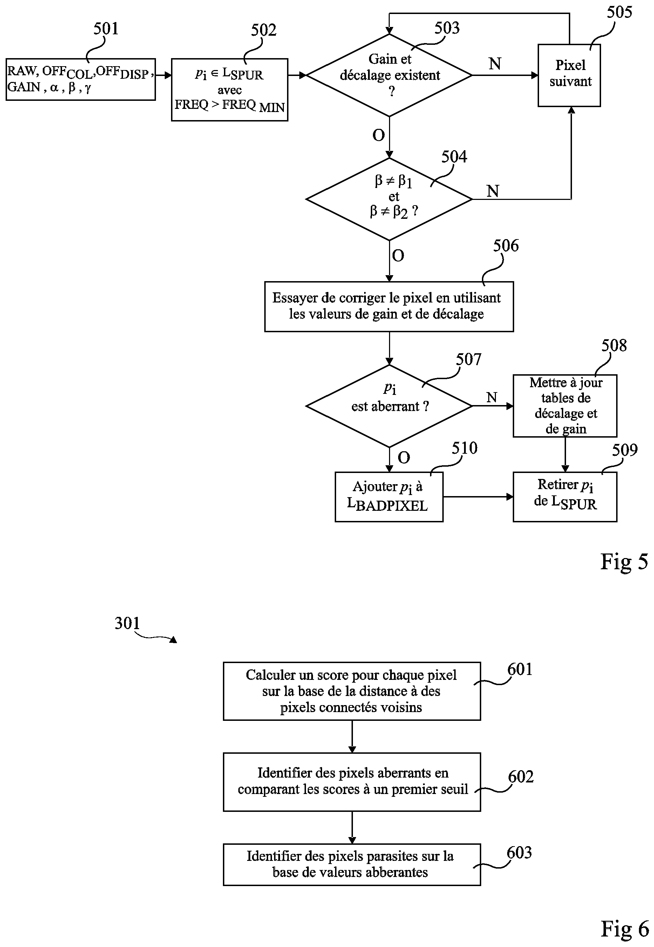

Bien que dans certains modes de réalisation, les valeurs de correction de décalage et de gain calculées $s_{Off}$ et $s_{Gain}$ puissent être utilisées pour modifier directement les valeurs de gain et de décalage 208, 210, au moins une vérification de ces valeurs est par exemple réalisée pour vérifier leur validité en présence d'un changement de température, comme on va le décrire maintenant en référence à la figure 5.

La figure 5 est un organigramme illustrant un exemple de mise en oeuvre de l'opération 303 de la figure 3 pour valider les valeurs de correction de décalage et de gain pour un ou plusieurs pixels.

Dans une opération 501 une image est capturée et corrigée en utilisant les valeurs de décalage et de gain 208, 210, en fournissant comme entrées l'image capturée RAW, et les valeurs de décalage $OFF_{COL}$, $OFF_{DISP}$, les valeurs de gain GAIN, et les termes $\alpha$, $\beta$ et $\gamma$ utilisés pour corriger l'image conformément à l'équation 1 susmentionnée. En outre, une indication de la température du plan focal est par exemple reçue. En effet, comme cela a été mentionné précédemment en relation avec l'opération 303 de la figure 3, une validation des valeurs de décalage et de gain est par exemple réalisée à une température du plan focal différente de celle du moment où les valeurs de décalage et de gain ont été calculées. Ainsi, l'indication de la température du plan focal est utilisée pour vérifier si la température du plan focal a changé. Dans l'exemple de la figure 5, l'indication de température est donnée par la valeur du facteur d'échelle $\beta$, qui varie avec la température. Les inventeurs ont remarqué que les informations de température fournies par le facteur $\beta$ sont suffisamment fiables dans ce contexte de validation des nouvelles corrections de pixels parasites. Cependant, dans des variantes de réalisation, une valeur de température T générée par un capteur de température pourrait être utilisée. Par exemple, le réseau de pixels comprend un capteur de température intégré dans le réseau ou en contact avec lui pour fournir la température du plan focal.

Dans une opération 502, des pixels sont par exemple sélectionnés parmi les pixels $p_i$ de la liste $L_{SPUR}$ pour lesquels la fréquence de détection FREQ dépasse un niveau de seuil $FREQ_{MIN}$ et les opérations suivantes du procédé ne sont réalisées que sur ces pixels.

Dans une opération 503, on détermine ensuite si des valeurs de correction de gain et de décalage existent pour un premier des pixels $p_i$. Si oui, l'opération suivante est l'opération 504, alors que dans la négative l'opération suivante est l'opération 505 dans laquelle le pixel suivant dans la liste est sélectionné et le procédé revient à l'opération 503.

Dans des variantes de réalisation, on pourrait appliquer le procédé de la figure 5 à tous les pixels $P_i$ de la liste pour lesquels des valeurs de correction de décalage et de gain ont été calculées, indépendamment de la fréquence de détection. Ainsi l'opération 502 pourrait être omise.

Dans une opération 504, on détermine si la valeur $\beta$ dépendant de la température courante est égale ou proche de l'une ou l'autre des valeurs $\beta_1$ et $\beta_2$ associées aux pixels $p_{SPUR1}$ et $p_{SPUR2}$ mémorisés dans la liste $L_{SPUR}$ dans des opérations 405 et 408 respectivement du procédé de la figure 4. Par exemple, on détermine si la différence absolue entre $\beta$ et $\beta_1$ est supérieure à un seuil $\beta_{min}$, et si la différence absolue entre $\beta$ et $\beta_2$ est supérieure au seuil $\beta_{min}$. Si l'une ou l'autre de ces différences est inférieure au seuil, le procédé revient par exemple à l'opération 505. Par contre, s'il y a eu un changement significatif de température (changement de $\beta$) depuis le calcul des valeurs de correction de gain et de décalage, l'opération suivante est l'opération 506. Comme cela a été mentionné précédemment, plutôt que d'utiliser le facteur d'échelle $\beta$ comme indication de la température, une valeur de température T pourrait être capturée par un capteur de température. Dans un tel cas, les valeurs $\beta$, $\beta_1$ et $\beta_2$ vont être remplacées dans l'opération 504 de la figure 5 par des températures T, $T_1$ et $T_2$ respectivement, où les valeurs $T_1$ et $T_2$ sont des valeurs de température mesurées en relation avec les images précédentes et mémorisées dans les opérations 405 et 408, respectivement, de la figure 4.

Dans l'opération 506, les valeurs de correction de gain et de décalage pour le pixel $p_i$ sont utilisées comme essai pour corriger la valeur de pixel $p_{SPUR}$ obtenue pour l'image capturée dans l'opération 501, par exemple en appliquant les équations 1, 2 et 3 susmentionnées, avec les valeurs de gain et de décalage modifiées comme dans l'équation 5.

Dans une opération 507, on détermine ensuite si la valeur modifiée du pixel $p_i$ est encore aberrante, et d'autres termes s'il est encore identifié comme pixel parasite. Par exemple, la technique utilisée dans l'opération 301 pour détecter des pixels parasites est appliquée à l'image avec le pixel $p_i$ corrigé.

Si la valeur n'est pas aberrante, les valeurs de correction sont considérées comme validées, puisque la température du plan focal a été trouvée, dans l'étape 504, comme étant suffisamment éloignée de ses deux valeurs précédentes, et malgré ce changement de température la valeur de pixel n'est pas aberrante. Ainsi, dans une opération suivante 508, de nouvelles valeurs de décalage et de gain corrigées en utilisant les valeurs de correction $s_{Offset}$ et $s_{Gain}$ sont par exemple mémorisées dans les tables de décalage et de gain 208, 210, puis dans une opération 509, elles sont retirées de la liste $L_{SPUR}$ de pixels parasites.

Autrement, si le pixel $p_i$ est encore aberrant, on suppose alors par exemple que le pixel ne peut pas être corrigé par des corrections des valeurs de gain et de décalage. Le pixel est par conséquent par exemple ajouté à la liste $L_{BADPIXEL}$ des mauvais pixels dans une opération 510, puis l'opération 509 est réalisée pour retirer le pixel de la liste $L_{SPUR}$.

Un exemple de procédé pour détecter des pixels parasites mis en oeuvre dans l'opération 301 de la figure 3 va maintenant être décrit plus en détail en faisant référence aux figures 6, 7 et 8.

La figure 6 est un organigramme illustrant un exemple d'opérations dans un procédé de détection de pixels parasites dans une image capturée. Le procédé est par exemple mis en oeuvre par le dispositif de traitement 112 de la figure 2, et l'image capturée a par exemple été corrigée en appliquant les valeurs de décalage et de gain 208, 210.

Dans une opération 601, un score est calculé pour chaque pixel de l'image d'entrée sur la base d'une distance en termes de valeurs de pixels, calculée par rapport à des pixels voisins connectés.

Dans une opération 602, des valeurs aberrantes sont par exemple identifiées en comparant les scores calculés à un premier seuil. Cette étape est par exemple utilisée pour sélectionner seulement un sous-ensemble des pixels comme pixels parasites potentiels. Dans certains modes de réalisation, cette étape pourrait toutefois être omise.

Dans une opération 603, des pixels parasites sont par exemples identifiés sur la base des valeurs aberrantes identifiées dans l'opération 602 (ou à partir de l'image entière dans le cas où l'opération 602 est omise).

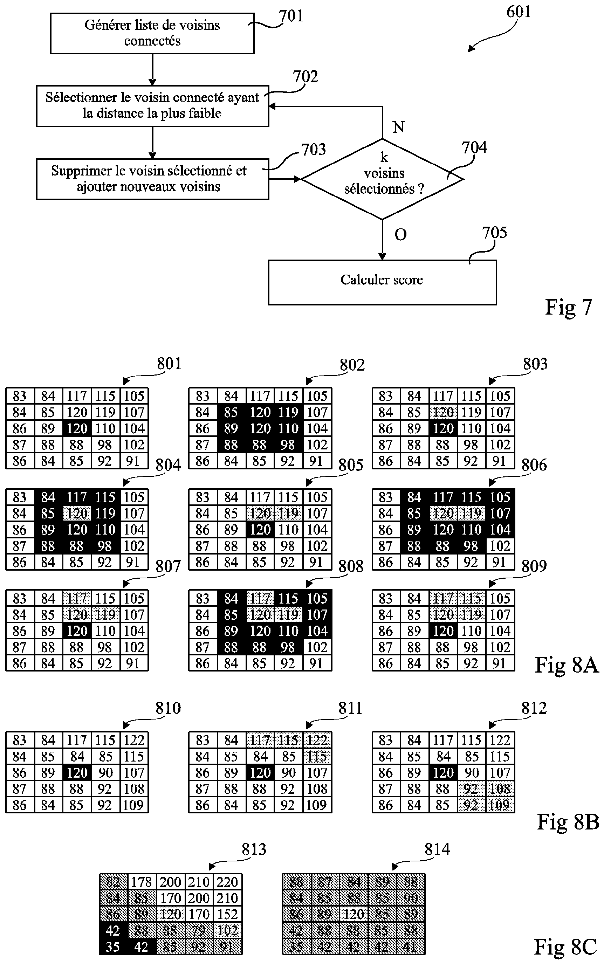

La figure 7 est un organigramme illustrant un exemple des opérations pour mettre en oeuvre l'opération 601 de la figure 6 pour produire les scores. Ce procédé est par exemple appliqué à chaque pixel de l'image tour à tour, par exemple dans un ordre de balayage en trame, bien que les pixels puissent être traités dans n'importe quel ordre. Les opérations de ce procédé vont être décrites en faisant référence à la figure 8A.

La figure 8A illustre neuf vues 801 à 809 d'une fenêtre de 5 par 5 pixels représentant un exemple d'application du procédé de la figure 7. Plus généralement, la taille de la fenêtre peut être définie comme étant H x H, où H est un entier impair égal au moins à 3, et par exemple égal au moins à 5. Dans certains modes de réalisation, H est égal ou inférieur à 15. La fenêtre de H par H est autour d'un pixel cible pour lequel un score doit être généré, en d'autres termes, le pixel cible est par exemple le pixel central de la fenêtre.

En faisant de nouveau référence à la figure 7, dans une opération 701, une liste de voisins du pixel connectés est générée. Les voisins connectés sont tous les pixels partageant une frontière ou un coin avec un pixel qui a déjà été sélectionné. Ainsi, pour un pixel qui n'est pas au niveau d'un bord de l'image, il y aura huit voisins connectés. Initialement, seul le pixel pour lequel un score doit être généré est sélectionné. Ce pixel va être appelé ici pixel cible. Par exemple, comme cela est représenté par la vue 801 de la figure 8A, un score doit être calculé pour un pixel central, grisé dans la figure, ayant une valeur de pixel de 120. Comme cela est représenté par la vue 802, les voisins connectés sont les huit pixels entourant le pixel central 120.

Dans une opération 702, parmi les voisins connectés, un pixel ayant une valeur de pixel ayant la distance la plus faible par rapport à la valeur du pixel cible est sélectionné. Par exemple, la distance d(a, b) entre des valeurs de pixels a et b est définie par $d(a,b) = |a-b|$. Comme cela est représenté par la vue 803 en figure 8A, un pixel ayant une valeur de 120, égale à la valeur de pixel cible, est sélectionné.

Dans une opération 703, le voisin sélectionné dans l'opération 702 est retiré la liste de voisins connectés du pixel cible, et de nouveaux voisins connectés sont ajoutés, qui comprennent des voisins connectés du voisin nouvellement sélectionné identifié dans l'opération 702. Par exemple, comme cela est représenté par la vue 804 en figure 8A, trois nouveaux pixels connectés au pixel nouvellement sélectionné sont ajoutés à la liste.

Dans une opération 704, on détermine si k voisins connectés ont été sélectionnés. Le nombre k de voisins à prendre compte est par exemple un paramètre fixe qui est sélectionné sur la base du nombre le plus élevé attendu de pixels parasites connectés. Par exemple, pour certains capteurs d'images, on peut considérer que les pixels parasites sont toujours isolés l'un par rapport à l'autre. Dans un tel cas, k peut être choisi comme égal à juste 2. En variante si on considère qu'il est possible que pour un capteur d'image donné deux pixels parasites connectés puissent être identifiés, une valeur de k supérieure est par exemple sélectionnée, par exemple égale à une valeur comprise entre 3 et 5. Dans l'exemple de la figure 8A, k est égal à 4. Si k voisins n'ont pas encore été sélectionnés, le procédé revient à l'opération 702, dans laquelle un nouveau voisin connecté est de nouveau sélectionné. Les opérations 703 et 704 sont ensuite répétées jusqu'à ce que k voisins aient été sélectionnés, puis une opération 705 est réalisée. Comme cela est représenté dans les vues 805 à 809 de la figure 8A, un bloc de quatre voisins du pixel cible est sélectionné.

La figure 8B illustre des vues d'une fenêtre de H par H pixels, et démontre la différence entre un calcul de distance basé simplement sur les plus proches voisins dans une fenêtre, et un calcul basé sur les voisins connectés les plus proches. Comme cela est représenté par une vue 810, le pixel central est aberrant, puisque la différence entre sa valeur et son voisinage est élevée.

Une vue 811 représente quatre voisins sélectionnés dans la fenêtre qui ont les valeurs les plus proches du pixel central, et qui sont non connectés avec celui-ci. Ce calcul va conduire à un faible score indiquant que le pixel n'est pas aberrant.

Une vue 812 représente quatre voisins connectés sélectionnés. Dans ce cas, quatre pixels complètement différents sont sélectionnés, et les scores indiquent clairement que le pixel cible est aberrant.

En faisant de nouveau référence à la figure 7, dans l'opération 705, le score pour le pixel cible est calculé sur la base des voisins connectés sélectionnés. Par exemple, le score $s_i$ pour un pixel cible $p_i$ est calculé sur la base de l'équation suivante :

$$s_i = w_i \sum_{j=1}^{k}(p_i - p_j) \qquad \sim 9$$

où $w_i$ est un poids associé au pixel, et $p_1$ à $p_k$ sont les k voisins connectés sélectionnés.

Le poids $w_1$ pour un pixel $p_i$ est par exemple déterminé en utilisant l'équation suivante :

$$w_i = \sqrt{1/(\sum_{p=H}^{H^2-H} std_{loc}(p) + \varepsilon)} \qquad \sim 10$$

où $std_{loc}$ est un réseau d'écarts types locaux calculé pour les pixels se trouvant dans la fenêtre de H par H du pixel $p_i$, triés dans l'ordre croissant, et $\varepsilon$ est un paramètre, par exemple réglé à une très faible valeur comme 0,0001. Ainsi le poids est basé sur les écarts types d'une sous-plage des pixels dans la fenêtre H par H, la sous-plage étant sélectionnée comme étant les pixels entre H et ($H^2$-H) sur la base des écarts types classés des pixels. Dans des variantes de réalisation, le poids pourrait être calculé sur la base de l'écart type d'un sous-ensemble différent des pixels.

Dans des variantes de réalisation, un poids différent pourrait être appliqué aux scores, où aucun poids ne pourrait être appliqué aux scores. Un avantage de l'application d'un poids basé sur l'écart type local du pixel est que la texture de la zone du pixel peut être prise en compte, une pondération supérieure étant donnée aux scores des pixels se trouvant dans des zones douces, et une pondération inférieure étant donnée aux scores des pixels se trouvant dans des zones texturées où un écart relativement élevé peut être attendu.

La figure 8C illustre des vues 813, 814 de deux fenêtres de pixels H par H, et démontre l'avantage d'appliquer le poids sur la base de l'écart type local des pixels. Le score du pixel cible dans les deux vues devrait être le même. Toutefois, dans la vue 813, il y a un bord passant à travers le pixel cible, et ainsi le pixel ne devrait pas être considéré comme aberrant. Dans la vue 814, l'image est relativement lisse dans la région du pixel cible, et le pixel cible devrait être considéré comme aberrant. Le poids $w_i$ calculé pour la vue 814 sur la base de l'écart type local va être supérieur au poids calculé pour la vue 813.

En faisant de nouveau référence au procédé de la figure 6, l'opération 602 implique par exemple de déterminer un score de seuil sur la base d'une distribution de probabilité pour des scores attendus dans l'image. Les présents inventeurs ont trouvé que la distribution de Laplace est particulièrement bien adaptée à la plupart des scènes d'image en infrarouge.

Il est connu que si $S \sim Laplace(O, \sigma)$, alors $|S| \sim Exp(\sigma^1)$ est une distribution exponentielle. La fonction de densité de probabilité $|S| \sim Exp(\lambda)$, avec $\lambda = \sigma^1$, est par conséquent de la forme $f(x) = \lambda e^{-\lambda x}$, avec $\lambda > 0$. Sa fonction de distribution est $F(x) = 1 - e^{-\lambda x}$. Le paramètre $\lambda$ de l'exponentielle peut être estimé en estimant la moyenne, sur la base de la moyenne de l'échantillon, et en prenant l'inverse de cette moyenne :

$$\hat{\lambda} = \frac{n}{\sum_{i=1}^{n}|S|} \qquad \sim 11$$

où n est le nombre de pixels dans l'image.

En appelant le seuil $thr_{outlier}$, ce seuil est par exemple calculé sur la base de $\hat{\lambda}$ en utilisant l'équation suivante :

$$thr_{outlier} = \frac{\ln(4)}{\hat{\lambda}} + 1.5 \times \frac{\ln(3)}{\hat{\lambda}} \qquad \sim 12$$

Plutôt que de calculer le seuil en utilisant cette équation, une alternative consisterait à simplement choisir un seuil qui élimine par filtrage un certain pourcentage des scores, comme 95% des scores. Toutefois, un avantage d'un filtrage utilisant le seuil comme décrit ci-avant sur la base de la distribution de Laplace est que cela évite des problèmes introduits par le bruit. En effet, si un pourcentage fixe des scores est sélectionné, le nombre de pixels sélectionnés va être le même pour une même image avec ou sans bruit. Toutefois, le seuil déterminé sur la base de la distribution de Laplace va varier en fonction du niveau de bruit dans l'image.

L'opération 603 de la figure 6 implique par exemple l'identification de pixels parasites parmi les pixels aberrants identifiés dans l'opération 602. Cela est par exemple obtenu en sélectionnant des scores au-dessus d'un niveau de seuil calculé sur la base des scores des pixels aberrants. Le seuil $thr_{SPUR}$ est par exemple déterminé en utilisant l'équation suivante :

$$thr_{SPUR} = Q3 + x_{EI} \times (Q3 - Q1) \qquad \sim 13$$

où $x_{EI}$ est un paramètre choisi par exemple entre 1,0 et 5,0 et par exemple égal à 1,5, et Q1 et Q3 sont les premier et troisième quartiles des pixels aberrants identifiés dans l'opération 602, respectivement.

Dans certains modes de réalisation, pour éviter de fausses alertes, un pixel n'est considéré comme pixel parasite que si son score dépasse le seuil thr$_{SPUR}$ et son score est supérieur à un seuil minimum thr$_{scoremin}$ égal à une valeur fixe.

Un avantage des modes de réalisation décrits ici est qu'on peut détecter des pixels parasites en utilisant un procédé relativement simple et efficace. En outre, le procédé de correction de pixels parasites signifie que, plutôt que d'être classés comme mauvais pixels, des valeurs de pixels, portant des informations de la scène, provenant de certains pixels peuvent continuer à être utilisées pour générer des pixels de l'image.

Avec la description ainsi faite d'au moins un mode de réalisation illustratif, diverses altérations, modifications, et améliorations apparaîtront à l'homme de l'art.

Par exemple, bien qu'on ait décrit un exemple spécifique de micro-bolomètre en relation avec les figures 1 et 2, il apparaîtra clairement à l'homme de l'art que les procédés décrits ici pourraient être appliqués à diverses autres mises en oeuvre d'un micro-bolomètre, où à d'autres types de dispositifs de capture d'image en infrarouge.

En outre, il apparaîtra clairement à l'homme de l'art que les diverses opérations décrites en relation avec les divers modes de réalisations pourraient être réalisées, dans des variantes de réalisation, dans des ordres différents sans impacter leur efficacité.

## Revendications

1. Procédé de correction de pixels parasites d'un réseau de pixels (102) d'un dispositif de capture d'image sensible au rayonnement infrarouge, le procédé comprenant :

   recevoir, par un dispositif de traitement (202) du dispositif de capture d'image, une première image d'entrée (RAW) capturée par le réseau de pixels (102), et corriger la première image d'entrée en appliquant des valeurs de gain et de décalage à des valeurs de pixels dans la première image d'entrée ;
   détecter dans la première image d'entrée corrigée au moins un pixel parasite, et ajouter ledit au moins un pixel parasite à une liste (L$_{SPUR}$) de pixels parasites ;
   recevoir, par le dispositif de traitement (202), une deuxième image d'entrée (RAW) capturée par le réseau de pixels (102) et corriger la deuxième image d'entrée en appliquant les valeurs de gain et de décalage à des valeurs de pixels dans la deuxième image d'entrée ; et
   calculer des valeurs de correction de gain et de décalage (s$_{Off}$, s$_{Gain}$) pour ledit au moins un pixel parasite sur la base des première et deuxième images d'entrée corrigées.

2. Procédé selon la revendication 1, comprenant en outre une validation des valeurs de correction de gain et de décalage (s$_{Off}$, s$_{Gain}$) en les appliquant pour corriger les valeurs dudit au moins un pixel parasite dans une troisième image capturée par le réseau de pixels (102) et en détectant si ledit au moins un pixel parasite est encore détecté comme pixel parasite dans la troisième image.

3. Procédé selon la revendication 2, dans lequel la troisième image d'entrée est capturée à une température du réseau de pixels différente de celle de chacune des première et deuxième images d'entrée.

4. Procédé selon la revendication 2 ou 3, comprenant en outre, avant le calcul des valeurs de correction de gain et de décalage, l'ajout dudit au moins un pixel parasite détecté à une liste de mauvais pixels, et le retrait dudit au moins un pixel parasite détecté de la liste de mauvais pixels si les valeurs de correction de gain et de décalage sont validées pendant l'étape de validation.

5. Procédé selon l'une quelconque des revendications 1 à 4, dans lequel le réseau de pixels comprend des colonnes de pixels, chaque colonne étant associée à un pixel de référence correspondant, et dans lequel la correction des première et deuxième images d'entrée comprend :

   déterminer, sur la base de l'image d'entrée et d'un vecteur de composante de colonne (V$_{COL}$) représentant un écart de colonne introduit par les pixels de référence du réseau de pixels, un premier facteur d'échelle ($\alpha$) en estimant un niveau de l'écart de colonne présent dans l'image d'entrée ;
   générer des valeurs de décalage de colonne ($\alpha$V$_{COL}$(x)) sur la base du produit du premier facteur d'échelle par les valeurs du vecteur de composante de colonne (V$_{COL}$) ;
   déterminer, sur la base de l'image d'entrée et d'une matrice de dispersion 2D (OFF$_{DISP}$) représentant la dispersion 2D introduite par le réseau de pixels, un deuxième facteur d'échelle ($\beta$) en estimant un niveau de la dispersion 2D présente dans l'image d'entrée ;
   générer des valeurs de décalage de pixel ($\beta$OFF$_{DISP}$(x,y)) sur la base du produit du deuxième facteur d'échelle par les valeurs de la matrice de dispersion 2D (OFF$_{DISP}$) ; et
générer l'image corrigée (CORR) en appliquant les valeurs de décalage de colonne et de pixels.

**6.** Procédé selon l'une quelconque des revendications 1 à 5 dans lequel l'image corrigée (CORR) est générée sur la base de l'équation :

$$CORR(x,y) = GAIN(x,y) \times (RAW(x,y) - \alpha.OFF_{COL}(x,y) - \beta.OFF_{DISP}(x,y) - \gamma)$$

où RAW est l'image d'entrée, $\alpha$ et $\beta$ sont des facteurs d'échelle, $\gamma$ est une valeur de correction de gain, GAIN(x, y) est une valeur de gain, OFF$_{COL}$(x,y) et OFF$_{DISP}$(x,y) sont des valeurs de décalage, OFF$_{COL}$ étant une matrice comprenant, dans chacune de ses rangées, le vecteur de colonne V$_{COL}$, OFF$_{DISP}$ étant la matrice de dispersion de référence.

**7.** Procédé selon l'une quelconque des revendications 1 à 6, dans lequel le calcul des valeurs de correction de gain et de décalage (s$_{Off}$, s$_{Gain}$) pour ledit au moins un pixel parasite sur la base des première et deuxième images d'entrée corrigées comprend :

estimer, sur la base de pixels voisins dans la première image d'entrée, une première valeur de pixel attendue (p$_{EXP1}$) de chacun desdits au moins un pixel parasite ;
estimer, sur la base de pixels voisins dans la deuxième image d'entrée, une deuxième valeur de pixel attendue (p$_{EXP2}$) de chacun desdits au moins un pixel parasite ; et
calculer les valeurs de correction de gain et de décalage (s$_{Off}$, s$_{Gain}$) sur la base des première et deuxième valeurs de pixels attendues estimées.

**8.** Procédé selon l'une quelconque des revendications 1 à 7, dans lequel la détection dudit au moins un pixel parasite comprend :

calculer un score pour une pluralité de pixels cibles comprenant au moins certains des pixels de la première image d'entrée, le score pour chaque pixel cible étant généré sur la base de k pixels voisins connectés de l'image d'entrée dans une fenêtre de H par H pixels autour du pixel cible, H étant un entier impair égal ou supérieur à 3, et k étant un entier compris entre 2 et 5, chacun des pixels voisins connectés partageant une frontière ou un coin avec au moins un autre des pixels voisins connectés et/ou avec le pixel cible et au moins l'un des pixels voisins connectés partageant une frontière ou un coin avec le pixel cible ; et
détecter qu'au moins l'un des pixels est un pixel parasite sur la base des scores calculés.

**9.** Procédé selon la revendication 8, dans lequel la détection dudit au moins un pixel parasite comprend la comparaison d'au moins certains des scores à une valeur de seuil (thr$_{SPUR}$).

**10.** Procédé selon la revendication 9, dans lequel la comparaison d'au moins certains des scores à une valeur de seuil implique la comparaison d'un sous-ensemble des scores à la valeur de seuil, le sous-ensemble comprenant plusieurs des scores les plus élevés, et dans lequel la valeur de seuil est calculée sur la base de l'équation suivante :

$$thr_{SPUR} = Q3 + x_{EI} \times (Q3 - Q1)$$

où X$_{EI}$ est un paramètre égal à au moins 1,0 et Q1 et Q3 sont les premier et troisième quartiles respectivement du sous-ensemble.

**11.** Procédé selon la revendication 9 ou 10, dans lequel lesdits au moins certains scores sont sélectionnés en appliquant un autre seuil (thr$_{outlier}$) aux scores calculés.

**12.** Procédé selon la revendication 11, dans lequel l'autre seuil est calculé sur la base d'une supposition que les valeurs de pixels dans l'image ont une distribution de probabilités basée sur la distribution de Laplace.

**13.** Procédé selon la revendication 12, dans lequel l'autre seuil est calculé sur la base de l'équation suivante :

$$thr_{outlier} = \frac{\ln(4)}{\hat{\lambda}} + 1.5 \times \frac{\ln(3)}{\hat{\lambda}}$$

où $\hat{\lambda}$ est une estimation du paramètre de la distribution exponentielle $f(x) = \lambda e^{-\lambda x}$ correspondant à la valeur absolue ($|S|$) des scores calculés.

14. Support de stockage lisible par ordinateur mémorisant des instructions pour mettre en oeuvre le procédé de l'une quelconque des revendications 1 à 13 lorsqu'elles sont exécutées par un dispositif de traitement.

15. Dispositif de traitement d'image comprenant :

une mémoire (206) mémorisant des valeurs de décalage et de gain (208, 201) et une liste ($L_{SPUR}$) de pixels parasites (212) ;
un dispositif de traitement (302) adapté à :

recevoir une première image d'entrée (RAW) capturée par un réseau de pixels (102) d'un dispositif de capture d'image sensible au rayonnement infrarouge, et corriger la première d'image d'entrée en appliquant les valeurs de gain et de décalage à des valeurs de pixels dans la première image d'entrée ;
détecter dans la première image d'entrée corrigée (RAW) au moins un pixel parasite, et ajouter ledit au moins un pixel parasite à la liste ($L_{SPUR}$) de pixels parasites ;
recevoir une deuxième image d'entrée (RAW) capturée par le réseau de pixels (102) et corriger la deuxième image d'entrée (RAW) en appliquant les valeurs de gain et de décalage à des valeurs de pixel dans la deuxième image d'entrée ; et
calculer des valeurs de correction de gain et de décalage ($s_{Off}$, $s_{Gain}$) pour ledit au moins un pixel parasite sur la base des première et deuxième images d'entrée corrigées.

16. Dispositif de traitement selon la revendication 15, dans lequel le dispositif de traitement est en outre adapté à valider les valeurs de correction de gain et de décalage ($s_{Off}$, $s_{Gain}$) en les appliquant pour corriger les valeurs dudit au moins un pixel parasite dans une troisième image d'entrée capturée par le réseau de pixels (102) et en détectant si ledit au moins un pixel parasite est encore détecté comme pixel parasite dans la troisième image.

**Patentansprüche**

1. Verfahren zum Korrigieren von unechten Pixeln bzw. Störpixeln einer Pixelanordnung (102) einer Abbildungsvorrichtung, die sensitiv auf Infrarotstrahlung ist, wobei das Verfahren Folgendes aufweist:

Empfangen durch eine Verarbeitungsvorrichtung (202) der Abbildungsvorrichtung eines ersten Eingangsbildes (RAW), das von der Pixelanordnung (102) erfasst wurde, und Korrigieren des ersten Eingangsbildes durch Anlegen von Verstärkungs- und Versatzwerten an Pixelwerte von Pixeln in dem ersten Eingangsbild;
Detektieren in dem ersten korrigierten Eingangsbild von wenigstens einem Störpixel und Hinzufügen des wenigstens einen Störpixels zu einer Liste ($L_{SPUR}$) von Störpixeln;
Empfangen durch die Verarbeitungsvorrichtung (202) eines zweiten Eingangsbildes (RAW), das von der Pixelanordnung (102) erfasst wurde, und
Korrigieren des zweiten Eingangsbildes durch Anlegen der Verstärkungs- und Versatzwerte an Pixelwerte von Pixeln in dem zweiten Eingangsbild; und
Berechnen von Verstärkungs- und Versatzkorrekturwerten ($s_{Off}$, $s_{Gain}$) für das wenigstens eine Störpixel basierend auf den ersten und zweiten korrigierten Eingangsbildern.

2. Verfahren nach Anspruch 1, das ferner das Validieren der Verstärkungs- und Versatzkorrekturwerte ($s_{Off}$, $s_{Gain}$) aufweist durch Anlegen dieser, um die Werte des wenigstens einen Störpixels in einem dritten Eingangsbild zu korrigieren, das von der Pixelanordnung (102) erfasst wird und Detektieren, ob das wenigstens eine Störpixel immer noch als Störpixel in dem dritten Bild detektiert wird.

3. Verfahren nach Anspruch 2, wobei das dritte Eingangsbild bei einer unterschiedlichen Pixelanordnungstemperatur als derjenigen des ersten und des zweiten Eingangsbildes erfasst wird.

4. Verfahren nach Anspruch 2 oder 3, das ferner vor dem Berechnen der Verstärkungs- und Versatzkorrekturwerte das Hinzufügen des wenigstens einen detektierten Störpixels zu einer Liste fehlerhafter Pixel und das Entfernen des wenigstens einen detektierten Störpixels aus der Liste fehlerhafter Pixel aufweist, wenn die Verstärkungs- und Versatzkorrekturwerte während des Validierungsschritts validiert bzw. überprüft wurden.

5. Verfahren nach einem der Ansprüche 1 bis 4, wobei die Pixelanordnung Spalten von Pixeln aufweist, wobei jede Spalte mit einem entsprechenden Referenzpixel assoziiert ist, und wobei die Korrektur des ersten und zweiten Eingangsbildes Folgendes aufweist:

Bestimmen basierend auf dem Eingangsbild und auf einem Spaltenkomponentenvektor ($V_{COL}$), der eine durch die Referenzpixel der Pixelanordnung eingeführte Spaltenausbreitung darstellt, eines ersten Skalierungsfaktors ($\alpha$) durch Schätzen eines Pegels der in dem Eingangsbild vorhandenen Spaltenausbreitung;
Erzeugen von Spaltenversatzwerten ($\alpha V_{COL}(x)$) basierend auf dem Produkt des ersten Skalierungsfaktors und dem Wert des Spaltenkomponentenvektors ($V_{COL}$);
Bestimmen basierend auf dem Eingangsbild und auf einer 2D-Dispersionsmatrix ($OFF_{DISP}$), die die durch die Pixelanordnung eingeführte 2D-Dispersion darstellt, eines zweiten Skalierungsfaktors ($\beta$) durch Schätzen eines Pegels der in dem Eingangsbild vorhandenen 2D-Dispersion;
Erzeugen von Pixelversatzwerten ($\beta OFF_{DISP}(x,y)$) basierend auf dem Produkt des zweiten Skalierungsfaktors und den Werten der 2D-Dispersionsmatrix ($OFF_{DISP}$); und
Erzeugen des korrigierten Bildes (CORR) durch Anlegen der Spalten- und Pixelversatzwerte.

6. Verfahren nach einem der Ansprüche 1 bis 5, wobei das korrigierte Bild (CORR) basierend auf der folgenden Gleichung erzeugt wird:

$$CORR(x,y) = GAIN(x, y) \times (RAW(x,y) - \alpha.OFF_{COL}(x, y) - \beta.OFF_{DISP}(x,y) - y),$$

wobei RAW das Eingangsbild ist, $\alpha$ und $\beta$ Skalierungsfaktoren sind, y ein Verstärkungskorrekturwert ist, GAIN (x,y) ein Verstärkungswert ist, $OFF_{COL}(x,y)$ und $OFF_{DISP}(x,y)$ Versatzwerte sind, $OFF_{COL}$ eine Matrix ist, die in jeder ihrer Zeilen den Spaltenvektor $V_{COL}$ aufweist, und $OFF_{DISP}$ die Referenzdispersionsmatrix ist.

7. Verfahren nach einem der Ansprüche 1 bis 6, wobei das Berechnen der Verstärkungs- und Versatzkorrekturwerte ($s_{Off}$, $s_{Gain}$) für das wenigstens eine Störpixel basierend auf den ersten und zweiten korrigierten Eingangsbildern Folgendes aufweist:

Schätzen basierend auf benachbarten Pixeln in dem ersten Eingangsbild eines ersten erwarteten Pixelwertes ($P_{EXP1}$) jedes der wenigstens einen Störpixel;
Schätzen basierend auf benachbarten Pixeln in dem zweiten Eingangsbild eines zweiten erwarteten Pixelwerts ($P_{EXP2}$) jedes der wenigstens einen Störpixel; und
Berechnen der Verstärkungs- und Versatzkorrekturwerte ($s_{Off}$, $s_{Gain}$) basierend auf den geschätzten ersten und zweiten erwarteten Pixelwerten.

8. Verfahren nach einem der Ansprüche 1 bis 7, wobei das Detektieren des wenigstens einen Störpixels Folgendes aufweist:

Berechnen eines Wertes für eine Vielzahl von Zielpixeln, die wenigstens einige der Pixel des ersten Eingangsbildes aufweisen, wobei die Wert für jedes Zielpixel basierend auf k miteinander verbundenen Nachbarpixeln des Eingangsbildes in einem Fenster von H mal H Pixeln um das Zielpixel herum erzeugt wird, wobei H eine ungerade ganze Zahl gleich oder größer 3 ist und k eine ganze Zahl zwischen 2 und 5 ist, wobei sich jedes der verbundenen Nachbarpixel eine Grenze oder Eckpunkt mit wenigstens einem anderen der verbundenen Nachbarpixeln und/oder mit dem Zielpixel teilt, und wobei sich wenigstens eines der verbundenen Nachbarpixel eine Grenze oder Eckpunkt mit dem Zielpixel teilt; und
Detektieren, dass wenigstens eines der Pixel ein Störpixel ist, basierend auf den berechneten Werten.

9. Verfahren nach Anspruch 8, wobei das Detektieren des wenigstens einen Störpixels das Vergleichen von wenigstens einigen der Werte mit einem Schwellenwert ($thr_{SPUR}$) aufweist.

10. Verfahren nach Anspruch 9, wobei das Vergleichen von wenigstens einigen der Werte mit einem Schwellenwert das Vergleichen einer Teilmenge der Werte mit dem Schwellenwert aufweist, wobei die Teilmenge eine Vielzahl der höchsten Werte aufweist, und wobei der Schwellenwert basierend auf der folgenden Gleichung berechnet wird:

$$thr_{SPUR} = Q3 + x_{EI} \times (Q3 - Q1)$$

wobei $X_{EI}$ ein Parameter gleich zu wenigstens 1,0 ist und Q1 und Q3 die ersten und dritten Quartile bezüglich der Teilmenge sind.

11. Verfahren nach Anspruch 9 oder 10, wobei die wenigstens einigen Werte durch Anlegen eines weiteren Schwellenwertes ($thr_{outlier}$) zu den berechneten Werten ausgewählt werden.

12. Verfahren nach Anspruch 11, wobei der weitere Schwellwert basierend auf einer Annahme berechnet wird, dass die Pixelwerte in dem Bild eine auf der Laplace-Verteilung basierende Wahrscheinlichkeitsverteilung haben.

13. Verfahren nach Anspruch 12, wobei der weitere Schwellenwert basierend auf der folgenden Gleichung berechnet wird:

$$thr_{outlier} = \frac{\ln(4)}{\hat{\lambda}} + 1.5 \times \frac{\ln(3)}{\hat{\lambda}}$$

wobei $\hat{\lambda}$ eine Schätzung des Exponentialverteilungsparameters $f(x) = \lambda e^{-\lambda x}$ entsprechend dem absoluten Wert ($|S|$) der berechneten Werte ist.

14. Computerlesbares Speichermedium, das Anweisungen zum Implementieren des Verfahrens nach einem der Ansprüche 1 bis 13 speichert, wenn sie von einer Verarbeitungsvorrichtung ausgeführt werden.

15. Bildverarbeitungsvorrichtung, die Folgendes aufweist:

einen Speicher (206), der Versatz- und Verstärkungswerte (208, 201) und eine Liste ($L_{SPUR}$) von Störpixeln (212) speichert;
eine Verarbeitungsvorrichtung (302), die geeignet ist zum:

Empfangen eines ersten, von einer Pixelanordnung (102) aufgenommenem Eingangsbild (RAW) von einer infrarotempfindlichen Bildaufnahmevorrichtung, und Korrigieren des ersten Eingangsbildes durch Anlegen der Verstärkungs- und Versatzwerte an Pixelwerte von Pixeln in dem ersten Eingangsbild;
Detektieren in dem korrigierten ersten Eingangsbild (RAW) wenigstens eines Störpixels und Hinzufügen des wenigstens einen Störpixels zu der Liste ($L_{SPUR}$) der Störpixel;
Empfangen eines zweiten Eingangsbildes (RAW), das von der Pixelanordnung (102) erfasst wird, und Korrigieren des zweiten Eingangsbildes (RAW) durch Anlegen der Verstärkungs- und Versatzwerte an Pixelwerte von Pixeln in dem zweiten Eingangsbild; und
Berechnen von Verstärkungs- und Versatzkorrekturwerten ($s_{Off}$, $s_{Gain}$) für das wenigstens eine Störpixel basierend auf den ersten und zweiten korrigierten Eingangsbildern.

16. Verarbeitungsvorrichtung nach Anspruch 15, wobei die Verarbeitungsvorrichtung ferner geeignet ist, die Verstärkungs- und Versatzkorrekturwerte ($s_{Off}$, $s_{Gain}$) zu validieren, indem sie angelegt werden, um die Werte des wenigstens einen Störpixels in einem dritten, von der Pixelanordnung (102) erfassten Eingangsbild zu korrigieren, und Detektieren, ob das wenigstens eine Störpixel immer noch als Störpixel in dem dritten Bild detektiert wird.


**Claims**

1. A method of correcting spurious pixels of a pixel array (102) of an imaging device sensitive to infrared radiation, the method comprising:

receiving, by a processing device (202) of the imaging device, a first input image (*RAW*) captured by the pixel array (102), and correcting the first input image by applying gain and offset values to pixel values of pixels in the first input image;

detecting in the corrected first input image at least one spurious pixel, and adding the at least one spurious pixel to a list ($L_{SPUR}$) of spurious pixels;

receiving, by the processing device (202), a second input image (*RAW*) captured by the pixel array (102) and correcting the second input image by applying the gain and offset values to pixel values of pixels in the second input image; and

calculating gain and offset correction values ($s_{Off}$, $s_{Gain}$) for the at least one spurious pixel based on the first and second corrected input images.

2. The method of claim 1, further comprising validating the gain and offset correction values ($s_{Off}$, $s_{Gain}$) by applying them to correct the values of the at least one spurious pixel in a third input image captured by the pixel array (102) and detecting whether the at least one spurious pixel is still detected as a spurious pixel in the third image.

3. The method of claim 2, wherein the third input image is captured at a different pixel array temperature to that of each of the first and second input images.

4. The method of claim 2 or 3, further comprising, before calculating said gain and offset correction values, adding the at least one detected spurious pixel to a list of bad pixels, and removing the at least one detected spurious pixel from the list of bad pixels if the gain and offset correction values are validated during the validation step.

5. The method of any of claims 1 to 4, wherein the pixel array comprises columns of pixels, each column being associated with a corresponding reference pixel, and wherein correcting the first and second input images comprises:

   determining, based on the input image and on a column component vector ($V_{COL}$) representing column spread introduced by the reference pixels of the pixel array, a first scale factor ($\alpha$) by estimating a level of said column spread present in the input image;

   generating column offset values ($\alpha V_{COL}(x)$) based on the product of the first scale factor with the values of the column component vector ($V_{COL}$) ;

   determining, based on the input image and on a 2D dispersion matrix ($OFF_{DISP}$) representing 2D dispersion introduced by the pixel array, a second scale factor ($\beta$) by estimating a level of said 2D dispersion present in the input image;

   generating pixel offset values ($\beta OFF_{DISP}(x,y)$) based on the product of the second scale factor with the values of the 2D dispersion matrix ($OFF_{DISP}$); and

   generating the corrected image (*CORR*) by applying the column and pixel offset values.

6. The method of any of claims 1 to 5, wherein said corrected image (*CORR*) is generated based on the equation:

$$CORR(x, y) = GAIN(x, y) \times (RAW(x, y) - \alpha.OFF_{COL}(x, y) - \beta.OFF_{DISP}(x, y) - \gamma)$$

where *RAW* is the input image, $\alpha$ and $\beta$ are scale factors, $\gamma$ is a gain correction value, *GAIN(x,y)* is a gain value, $OFF_{COL}(x,y)$ and $OFF_{DISP}(x,y)$ are offset values, $OFF_{COL}$ being a matrix comprising, in each of its rows, the column vector $V_{COL}$, $OFF_{DISP}$ being the reference dispersion matrix.

7. The method of any of claims 1 to 6, wherein calculating the gain and offset correction values ($s_{Off}$, $s_{Gain}$) for the at least one spurious pixel based on the first and second corrected input images comprises:

   estimating, based on neighboring pixels in the first input image, a first expected pixel value ($p_{EXP1}$) of each of the at least one spurious pixels;

   estimating, based on neighboring pixels in the second input image, a second expected pixel value ($p_{EXP2}$) of each of the at least one spurious pixels; and

   calculating the gain and offset correction values ($s_{Off}$, $s_{Gain}$) based on the estimated first and second expected pixel values.

8. The method of any of claims 1 to 7, wherein detecting the at least one spurious pixel comprises:

   calculating a score for a plurality of target pixels comprising at least some of the pixels of the first input image, the score for each target pixel being generated based on $k$ connected neighboring pixels of the input image within a window of $H$ by $H$ pixels around the target pixel, $H$ being an odd integer of 3 or more, and $k$ being an integer of between 2 and 5, wherein each of the connected neighboring pixels shares a border or corner point with at least another of the connected neighboring pixels and/or with the target pixel and wherein at least one of the connected neighboring pixels shares a border or corner point with the target pixel; and
detecting that at least one of the pixels is a spurious pixel based on the calculated scores.

9. The method of claim 8, wherein detecting the at least one spurious pixel comprises comparing at least some of the scores with a threshold value ($thr_{SPUR}$).

10. The method of claim 9, wherein comparing at least some of the scores with a threshold value involves comparing a subset of the scores with the threshold value, the subset comprising a plurality of the highest scores, and wherein the threshold value is calculated based on the following equation:

$$thr_{SPUR} = Q3 + x_{EI} \times (Q3 - Q1)$$

where $x_{EI}$ is a parameter equal to at least 1.0 and $Q1$ and $Q3$ are the first and third quartiles respectively of the subset.

11. The method of claim 9 or 10, wherein the at least some scores are selected by applying a further threshold ($thr_{outlier}$) to the calculated scores.

12. The method of claim 11, wherein said further threshold is calculated based on an assumption that the pixel values in the image have a probability distribution based on the Laplace distribution.

13. The method of claim 12, wherein said further threshold is calculated based on the following equation:

$$thr_{outlier} = \frac{\ln(4)}{\hat{\lambda}} + 1.5 \times \frac{\ln(3)}{\hat{\lambda}}$$

where $\hat{\lambda}$ is an estimation of the parameter of the exponential distribution $f(x) = \lambda e^{-\lambda x}$ corresponding to the absolute value ($|S|$) of the calculated scores.

14. A computer-readable storage medium storing instructions for implementing the method of any of claims 1 to 13 when executed by a processing device.

15. An image processing device comprising:

a memory (206) storing offset and gain values (208, 201) and a list ($L_{SPUR}$) of spurious pixels (212);
a processing device (302) adapted to:

receive a first input image ($RAW$) captured by a pixel array (102) of an imaging device sensitive to infrared radiation, and correct the first input image by applying the gain and offset values to pixel values of pixels in the first input image;
detect in the corrected first input image ($RAW$) at least one spurious pixel, and add the at least one spurious pixel to the list ($L_{SPUR}$) of spurious pixels;
receive a second input image ($RAW$) captured by the pixel array (102) and correct the second input image ($RAW$) by applying the gain and offset values to pixel values of pixels in the second input image; and
calculate gain and offset correction values ($s_{Off}$, $S_{Gain}$) for the at least one spurious pixel based on the first and second corrected input images.

16. The processing device of claim 15, wherein the processing device is further adapted to validate the gain and offset correction values ($s_{Off}$, $s_{Gain}$) by applying them to correct the values of the at least one spurious pixel in a third input image captured by the pixel array (102) and detecting whether the at least one spurious pixel is still detected as a spurious pixel in the third image.

Fig 1

Fig 2

Fig 3

Fig 4

EP 3 314 888 B1

## Fig 5

501 — RAW, $OFF_{COL}$, $OFF_{DISP}$, GAIN, $\alpha$, $\beta$, $\gamma$

502 — $p_i \in L_{SPUR}$ avec FREQ > $FREQ_{MIN}$

503 — Gain et décalage existent ?

N → 505 — Pixel suivant

O

504 — $\beta \neq \beta_1$ et $\beta \neq \beta_2$ ?

N →

O

506 — Essayer de corriger le pixel en utilisant les valeurs de gain et de décalage

507 — $p_i$ est aberrant ?

N → 508 — Mettre à jour tables de décalage et de gain

O

510 — Ajouter $p_i$ à $L_{BADPIXEL}$

509 — Retirer $p_i$ de $L_{SPUR}$

**Fig 5**

301

601 — Calculer un score pour chaque pixel sur la base de la distance à des pixels connectés voisins

602 — Identifier des pixels aberrants en comparant les scores à un premier seuil

603 — Identifier des pixels parasites sur la base de valeurs abberantes

**Fig 6**

## Fig 7

701 — Générer liste de voisins connectés

702 — Sélectionner le voisin connecté ayant la distance la plus faible

703 — Supprimer le voisin sélectionné et ajouter nouveaux voisins

704 — k voisins sélectionnés ?   N / O

705 — Calculer score

601

**Fig 7**

## Fig 8A

801

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

802

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

803

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

804

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

805

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

806

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

807

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

808

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

809

| 83 | 84 | 117 | 115 | 105 |
| 84 | 85 | 120 | 119 | 107 |
| 86 | 89 | 120 | 110 | 104 |
| 87 | 88 | 88 | 98 | 102 |
| 86 | 84 | 85 | 92 | 91 |

**Fig 8A**

## Fig 8B

810

| 83 | 84 | 117 | 115 | 122 |
| 84 | 85 | 84 | 85 | 115 |
| 86 | 89 | 120 | 90 | 107 |
| 87 | 88 | 88 | 92 | 108 |
| 86 | 84 | 85 | 92 | 109 |

811

| 83 | 84 | 117 | 115 | 122 |
| 84 | 85 | 84 | 85 | 115 |
| 86 | 89 | 120 | 90 | 107 |
| 87 | 88 | 88 | 92 | 108 |
| 86 | 84 | 85 | 92 | 109 |

812

| 83 | 84 | 117 | 115 | 122 |
| 84 | 85 | 84 | 85 | 115 |
| 86 | 89 | 120 | 90 | 107 |
| 87 | 88 | 88 | 92 | 108 |
| 86 | 84 | 85 | 92 | 109 |

**Fig 8B**

## Fig 8C

813

| 82 | 178 | 200 | 210 | 220 |
| 84 | 85 | 170 | 200 | 210 |
| 86 | 89 | 120 | 170 | 152 |
| 42 | 88 | 88 | 79 | 102 |
| 35 | 42 | 85 | 92 | 91 |

814

| 85 | 87 | 84 | 89 | 88 |
| 84 | 85 | 88 | 85 | 90 |
| 86 | 89 | 120 | 85 | 89 |
| 42 | 88 | 88 | 85 | 88 |
| 35 | 42 | 42 | 42 | 41 |

**Fig 8C**

## RÉFÉRENCES CITÉES DANS LA DESCRIPTION

**Documents brevets cités dans la description**

- FR 3009388
- US 7700919 B
- US 14695539 B
- FR 1453917
- JP 2015093484 A